# FASCICULE DE BREVET EUROPEEN

(11) **EP 2 176 172 B1**
(45) Date de publication et mention de la délivrance du brevet: **08.08.2018**
(21) Numéro de dépôt: 08806057.9
(22) Date de dépôt: 23.06.2008
(51) Int. Cl.: C02F 1/28, B01J 20/02, B01J 20/14, B01J 39/09, B01J 23/72, A01N 59/20, C05D 9/00, B09C 1/08

(54) **NOUVEAUX MATERIAUX COMPOSITES A BASE DE CUIVRE, LEUR PROCÉDÉ DE PRÉPARATION ET LEURS UTILISATIONS**
NEUE VERBUNDMATERIALIEN AUF KUPFERBASIS SOWIE HERSTELLUNGSVERFAHREN UND VERWENDUNGEN DAFÜR
NOVEL COPPER-BASED COMPOSITE MATERIALS, PROCESS FOR THE PREPARATION THEREOF AND USES THEREOF

(30) Priorité: 27.06.2007 FR 0756075
(43) Date de publication de la demande: 21.04.2010
(73) Titulaire: Olmix, 56580 Brehan (FR); Centre National de la Recherche Scientifique (C.N.R.S.), 75016 Paris (FR); Université de Haute Alsace, 68093 Mulhouse Cedex (FR)
(72) Inventeur: KNOERR, Raphaël, F-68500 Guebwiller (FR); DEMAIS, Hervé, F-56390 Brandivy (FR); BRENDLE, Jocelyne, F-68270 Wittenheim (FR); LEBEAU, Bénédicte, F-68700 Wattwiller (FR); PATARIN, Joël, F-68720 Flaxlanden (FR)
(74) Mandataire: Lavoix
(86) Numéro de dépôt international: PCT/FR2008/051125
(87) Numéro de publication internationale: WO 2009/007579

(56) Documents cités:
- EP-A- 0 592 958
- CA-A1- 2 504 703
- DE-A1- 1 592 709
- FR-A- 2 853 894
- GB-A- 934 329
- GB-A- 1 064 621
- US-A- 2 750 261
- US-A- 3 278 568
- US-A- 4 102 814
- US-A- 5 853 678
- MOHAMMED M. HASHEMI: "Copper(I) Chloride/Kieselguhr: a Versatile Catalyst for Oxidation of Alkyl Halides and Alkyl Tosylates to the Carbonyl Compounds" JOURNAL OF CHEMICAL RESEARCH (S), 1999, pages 434-435, XP002506733
- J. WU: "Advanced tertiary treatment of municipal waste water using raw and modified diatomite" JOURNAL OF HAZARDOUS MATERIALS B127, 2005, pages 196-203, XP002506971
- MAJEDA A. M. KHRAISHEH: "Remediation of waste water containing heavy metals using raw and modified diatomite" CHEMICAL ENGINEERING JOURNAL, vol. 99, 2004, pages 177-184, XP002467589
- DATABASE WPI Week 198312 Thomson Scientific, London, GB; AN 1983-28346K XP002467680 & JP 58 023609 A (RIKAGAKU KENKYUSHO) 12 février 1983 (1983-02-12)
- S. Mendioroz ET AL: "Thermogravimetric study of diatomites", JOURNAL OF THERMAL ANALYSIS., vol. 35, no. 7, 1 November 1989 (1989-11-01), pages 2097-2104, XP055410300, GB ISSN: 0368-4466, DOI: 10.1007/BF01911874
- KOUKOUZAS ET AL: "Mineralogy and geochemistry of diatomite associated with lignite seams in the Komnina Lignite Basin, Ptolemais, Northern Greece", INTERNATIONAL JOURNAL OF COAL GEOLOGY, ELSEVIER, AMSTERDAM, NL, vol. 71, no. 2-3, 5 May 2007 (2007-05-05), pages 276-286, XP022062262, ISSN: 0166-5162, DOI: 10.1016/J.COAL.2006.09.002

## Description

La présente invention a pour objet de nouveaux matériaux composites à base de cuivre et leur procédé de préparation, ainsi que leurs utilisations, notamment dans le domaine de la décontamination des eaux et des sols.

Les terres de diatomée sont des algues eucaryotes fossilisées microscopiques (∼1-200 µm) trouvant leurs origines principalement dans les zones lacustres. Elles sont protégées par une enveloppe dure appelée frustule, de composition chimique générale : 80 % de silice, 5 % d'alumine, 5 % d'oxyde de calcium et le complément d'autres minéraux. Aussi, l'origine ainsi que l'âge du sédiment conditionnent les propriétés de ce matériau naturel. Par exemple, une terre de diatomée extraite de carrières près des mers, présente un taux de cristallinité de 60% et une composition en CaCO₃ de l'ordre de 25%, contre moins de 1% de cristallinité et de carbonate pour une terre de diatomée issue de gisement d'eau douce.

D'un point de vue structurel, la terre de diatomée présente des caractéristiques physiques intrinsèques remarquables de par la forte porosité de sa frustule par exemple (taille de pore unitaire du micromètre) constituant environ 40% du volume total. De fait, de nombreuses applications de ce matériau macroporeux sont possibles sans qu'aucune modification préliminaire ne soit requise. En effet, la porosité de la frustule peut être assimilée à un tamis moléculaire (J. Parkinson and R. Gordon, Nanotechnology, 1999, 17, 230), où la taille de pore est régie par la nature de l'espèce. Un exemple d'application de la terre de diatomée à l'état brut, est son utilisation en tant que media filtrant, en piégeant par interactions physiques des composés organiques de taille importante. De fait, il vient que la sélectivité des composés organiques à piéger est dépendante de la porosité de la terre de diatomée, et donc de la nature de la terre de diatomée considérée.

Il a été mis en évidence que la texture même de la frustule de la terre de diatomée est telle qu'elle est recouverte de pointes acérées, donnant lieu à des propriétés abrasives (Z. Korunic, J. stored Prod. Res., 1998, 34, 87-97 ; W. Quarles, IPM Practitioner, 1992, 14, 1-11 et W. Quarles, IPM Practitioner, 1996, 18, 1-10), largement mises en application au niveau industriel dans la lutte anti-parasitaire. D'autres applications de la terre de diatomée brute directement liées à ses propriétés physico-chimiques sont à relever. En effet, ce matériau est non inflammable, non soluble dans l'eau et extrêmement stable à l'air. Ainsi, la terre de diatomée trouve des applications dans l'isolation thermique (O. Unal, T. Uygunoglu and A. Yildiz, Building and Environment, 2007, 42, (2), 584), mais plus couramment en tant que charge fonctionnelle (X. Li, W. Chen, C. Bian, J. He, N. Xu and G. Xue, Applied Surface Science, 2003, 217, (1-4), 16) dans l'industrie de la peinture, du papier ou bien encore du caoutchouc.

La terre de diatomée est composée majoritairement de silice, présente soit sous forme de ponts siloxane (Si-O-Si) participant à la structure du squelette de la terre de diatomée, soit sous forme de groupements silanols (Si-OH) situés à la surface du matériau (P. Yuan, D. Q. Wu, H. P. He and Z. Y. Lin, Applied Surface Science, 2004, 227, (1-4), 30-39). Assimilés à des sites réactifs, ces derniers confèrent au matériau une réactivité chimique (J.-B. d'Espinose de la Caillerie, M. R. Aimeur, Y. E. Kortobi and A. P. Legrand, Journal of Colloid and Interface Science, 1997, 194, (2), 434-439) en conditionnant la charge, l'acidité, le caractère hydrophile de la surface, mais aussi les réactions d'échange de ligands et dite de «grafting» (greffage) permettant la fonctionnalisation de la terre de diatomée. Aussi, la modification de la terre de diatomée, à travers les silanols de surface, a pour objectif l'obtention de matériaux hybrides possédant des propriétés physico-chimiques nouvelles voire améliorées par rapport au matériau initial. Les documents US 3 278 568 (De Jonge Albert), US 5 853 678 (Yoshiaki Sugimori), GB 1 064 621 (Engelhard Industries) et US 2 750 261 (Vladimir N. Ipatieff) divulguent des matériaux composites comprenant de la terre de diatomée et une phase à base de cuivre. Ainsi, la présente invention a pour but de fournir un matériau composite à base de terre de diatomée obtenu en faisant croître une phase cristalline spécifique à la surface du squelette de diatomée.

La présente invention a également pour but de fournir un matériau composite à base de terre de diatomée ayant les propriétés de la terre de diatomée combinées à celles de la phase cristalline nouvellement créée.

La présente invention concerne un matériau composite comprenant de la terre de diatomée et une phase cristalline à base de cuivre, caractérisé en ce que la terre de diatomée est non calcinée et contient du carbonate de calcium et en ce que la phase à base de cuivre est constituée de devilline, de posnjakite ou de leurs mélanges. La présente invention concerne un matériau composite comprenant de la terre de diatomée et une phase à base de cuivre dans lequel la terre de diatomée est brute.

Le terme "terre de diatomée" désigne l'ensemble formé par le squelette de diatomée, les phases annexes tels que le quartz et l'éventuel carbonate de calcium.

Le terme "terre de diatomée brute" désigne une terre de diatomée non calcinée, c'est-à-dire une terre de diatomée n'ayant pas subi de calcination au préalable. En effet, il est souhaitable d'utiliser une terre de diatomée brute telle que définie ci-dessus, étant donné que la calcination conduit à une condensation des groupements silanols sous forme de ponts siloxanes, ce qui limite fortement la réactivité de surface du squelette de diatomée. Par ailleurs, la calcination conduit à l'oxydation du carbonate de calcium.

La phase à base de cuivre susmentionnée est une phase cristalline. La présente invention concerne un matériau composite tel que défini ci-dessus, dans lequel la terre de diatomée contient du carbonate de calcium.

De préférence, la terre de diatomée contient au moins environ 1% de carbonate de calcium, et de préférence d'environ 15% à environ 25% de carbonate de calcium.

Ainsi, la présente invention concerne notamment la croissance d'une phase cristalline à partir d'un sel de cuivre à la surface d'une terre de diatomée brute grâce au carbonate de calcium la composant, sans affecter ni son intégrité, ni sa structure, ni les groupements silanols présents à sa surface.

Selon un mode de réalisation avantageux, dans le matériau composite de l'invention, l'organisation de la phase cristalline à base de cuivre est de type lamellaire, sphérique ou sous forme d'aiguilles. Ladite phase à base de cuivre peut toutefois également présenter une morphologie non spécifique.

Le matériau composite selon l'invention est également caractérisé en ce que la phase cristalline à base de cuivre présente une morphologie de type rose des sables, sphérique ou sous forme d'aiguilles.

Les matériaux composites selon l'invention sont donc des composés mixtes terre de diatomée / cuivre élaborés par cristallisation de cuivre à partir de son sel à la surface du squelette de diatomée, dans lesquels la phase cristalline est de préférence un composé lamellaire à base de cuivre.

Les matériaux selon l'invention sont des composés siliciques macroporeux de type squelette de diatomée, modifiés comme mentionné ci-dessus, c'est-à-dire des matériaux de type squelette de diatomée comprenant une phase cristalline de cuivre.

Les matériaux composites de l'invention comprennent une matrice à base de terre de diatomée brute et une phase cristalline à base de cuivre uniformément présente à la surface de ladite matrice.

Selon un mode de réalisation particulier, le matériau composite de l'invention est caractérisé en ce que la terre de diatomée est choisie dans le groupe constitué des matériaux siliciques macroporeux d'algues eucaryotes fossilisées.

Selon un mode de réalisation particulier, le matériau composite de l'invention est caractérisé en ce qu'il a une capacité d'échange de cations comprise d'environ 7 à environ 300 meq/100 g.

Selon l'invention, la phase à base de cuivre du matériau composite est constituée de devilline (CaCu₄(SO₄)₂(OH)₆-3(H₂O)), de posnjakite (Cu₄(SO₄)(OH)₆·(H₂O)), ou de leurs mélanges.

La présente invention concerne également un procédé de préparation d'un matériau composite comprenant de la terre de diatomée non calcinée contenant du carbonate de calcium et une phase à base de cuivre, ledit procédé étant caractérisé en ce qu'il comprend les étapes suivantes :
- une étape de mise en présence de la terre de diatomée non calcinée contenant du carbonate de calcium avec une solution aqueuse de sel de cuivre,
- une étape de récupération dudit matériau composite, notamment par filtration ou centrifugation, et
- une étape de séchage, notamment à 40°C, ou une étape de lyophilisation. La terre de diatomée utilisée est brute.
Dans ces matériaux le sel de cuivre est présent en une quantité comprise d'environ 0,05% à environ 40% en poids par rapport au poids de la terre de diatomée.

Dans un premier temps, la terre de diatomée est activée par réaction des ions hydroxyle sur les silanols de la terre de diatomée, ainsi que sur les ponts siloxanes, afin de créer des sites actifs de type Si-O⁻. L'avantage de cette technique est l'obtention d'une densité de silanols importante en un temps relativement court.

Cette première étape est suivie de la fonctionnalisation à proprement dit, où la terre de diatomée traitée suite à l'étape susmentionnée, est mise en présence d'une solution aqueuse de cuivre (II). De fait, le cuivre (II) réagit préférentiellement avec les espèces Si-O⁻ créées dans la première étape, pour donner lieu à un matériau composite de type terre de diatomée/oxyde de cuivre.

Le principe à la base de l'obtention du matériau mixte terre de diatomée/phase cristalline de cuivre avec croissance préférentielle de cette dernière à la surface du squelette de diatomée peut être expliqué par le mécanisme suivant. Dans un premier temps, la terre de diatomée contenant du carbonate de calcium est dispersée dans le milieu de synthèse suivant différentes étapes (E. A. Neves, A. Oliveira, A. P. Fernandes and J. A. Nobrega, Food Chemistry, 2007, 101, (1), 33-36; A. M. Zhizhaev, V. I. Bragin and A. G. Mikhailov, Method for immobilization of technogenic copper. RU2182131, 19991014, 1999 ; D. Buhmann and W. Dreybrodt, 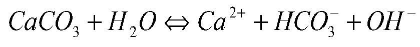 Chemical Geology, 1985, 48, 189-211 ), le carbonate de calcium présent dans la terre de diatomée étant tout d'abord dissocié selon la réaction suivante :

Après transport des espèces dissoutes de la terre de diatomée vers la solution notamment de sulfate de cuivre (II) (constituant la deuxième étape), celles-ci interagissent avec le cuivre et le sulfate en solution pour former dans un premier temps des nucléi, dès que la valeur de la constante de solubilité du matériau cristallin est dépassée, puis une couche cristalline de plus en plus dense (les nucléi sont les précurseurs de la phase cristalline). La phase élaborée par ce biais est entièrement dépendante de la nature du sel de cuivre mis en application.

Dans le cas du cuivre (II), la phase cristalline identifiée est un complexe cuivré, de type devilline (Devilline In Acta Crystallographica, 1972; Vol. B28) ou posnjakite (Posnjakite. In American Mineralogist, 1967; Vol. 52), ayant pour formule chimique générale respectivement CaCu₄(SO₄)₂(OH)₆·3(H₂O) et Cu₄(SO₄)(OH)₆·(H₂O). En considérant les compositions chimiques, il peut être remarqué que ces deux entités sont quasi identiques à la différence près de la présence de calcium dans le cas de la devilline, L'arrangement spatial de ces phases n'en est pas moins similaire. En effet, les feuillets pseudo-octaédriques (M. Mellini and S. Merlino, Zeitschrift fur Kristallographie, 1979, 149, (3-4), 249-257) de la devilline et de la posnjakite sont arrangés selon un empilement régulier de couches tétraédriques où le cuivre est en position centrale de chaque tétraèdre. L'organisation cristalline, composée des couches et des espaces inter-couches (espaces interfoliaires) participe alors à la structure lamellaire du nouveau matériau élaboré. Ainsi, la présence de cations de compensation (ions Ca²⁺ dans le cas de la devilline) ainsi que des molécules d'eau dans l'espace interfoliaire conditionne la nature de la phase cristalline présente à la surface de la terre de diatomée, c'est-à-dire soit la devilline, soit la posnjakite, soit un mélange des deux phases cristallines. Ce phénomène est cependant dépendant des conditions opératoires employées, telles que la concentration en sulfate de cuivre, le temps d'agitation, etc.

De précédentes études (D. Marani, J. W. Patterson and P. R. Anderson, Water Research, 1995, 29, (5), 1317-1326) ont décrit le principe de formation et de vieillissement de la phase cristalline posnjakite à partir de sulfate de cuivre ou d'hydroxyde de cuivre. Cette étude, bien que quantitative et qualitative, s'inscrit cependant uniquement dans le cadre de la rétention de cuivre (II) par piégeage sous forme de complexe, mais sans réellement développer les propriétés potentielles de tels matériaux. Un autre exemple de précipitation du cuivre (II) donnant lieu cette fois à la devilline est rapporté par Zhizhaev et col (A. M. Zhizhaev, V. I. Bragin and A. G. Mikhailov, Method for immobilization of technogenic copper. RU2182131, 19991014, 1999). Le principe de la technique fait état de la précipitation du cuivre (II) sous forme devilline à partir de calcaire de roche pour obtenir un matériau monofonctionnel, trouvant des applications uniquement dans la dépollution des sols.

Aussi, l'originalité de la présente invention, composite terre de diatomée/complexe cuivre, réside dans son caractère bifonctionnel, i.e. possédant les propriétés physico-chimiques tenantes des deux entités en présence, que sont d'une part la matrice terre de diatomée et d'autre part, le complexe cuivré.

Par la suite, différents traitements sur le composite terre de diatomée/phase cuivrée peuvent être envisagés, tels qu'un traitement thermique (calcination) ou un traitement basique (activation par de la soude).

Dans le cas d'une calcination à une température comprise entre 200°C et 300°C, il est obtenu des particules d'oxydes de cuivre métastables, issues de la décomposition thermique de la devilline. Ces oxydes possèdent un fort potentiel réactif de par leur caractère amorphe, car ils sont susceptibles d'évoluer vers un état énergétiquement plus faible. Dans le cas d'une calcination à une température inférieure à 800°C par exemple, il est obtenu un nouveau composite, de type terre de diatomée/tenorite (de formule chimique CuO) avec une distribution de la taille des particules de l'ordre de la centaine de nanomètres. Cette voie d'élaboration d'un oxyde de cuivre, de surcroît à la surface d'un matériau silicique est originale compte tenu des voies de synthèses classiques. En effet, la formation d'oxydes de cuivre est rapportée dans la littérature suivant un protocole de synthèse privilégié (E. M. B. de Sousa, A. O. Porto, P. J. Schilling, M. C. M. Alves and N. D. S. Mohallem, Journal of Physics and Chemistry of Solids, 2000, 61, (6), 853-861). Elle consiste à ajouter une faible quantité de cuivre à partir de sel de cuivre (CuSO₄ ou CuCl₂ à environ 5%mol) dans un système sol-gel précurseur d'un matériau silicique poreux. Suite à la cristallisation du matériau, le cuivre se trouve incorporé dans la matrice silicique sous forme hydroxyde. Un traitement thermique complémentaire à cette première étape, à une température supérieure à 900°C, conduit à la formation de l'oxyde de cuivre par condensation. Les applications des oxydes de cuivre en tant que tels couvrent un large champ d'applications, notamment dans le domaine de la haute technologie (T. Maruyama, Solar Energy Materials and Solar Cells, 1998, 56, (1), 85-92 ; Y. P. Sukhorukov, N. N. Loshkareva, A. A. Samokhvalov, S. V. Naumov, A. S. Moskvin and A. S. Ovchinnikov, Journal of Magnetism and Magnetic Materials, 1998, 183, (3), 356-358) et plus précisément dans le domaine de la catalyse (M. Frietsch, F. Zudock, J. Goschnick and M. Bruns, Sensors and Actuators B: Chemical, 2000, 65, (1-3), 379-381 ; C. L. Carnes and K. J. Klabunde, Journal of Molecular Catalysis A: Chemical, 2003, 194, (1-2), 227-236). La littérature décrit largement l'utilisation des silicates dopés au cuivre comme une alternative aux catalyseurs cuivre-chromite (A. J. Rouco, Applied Catalysis A: General, 1994, 117, (2), 139-149 ; A. K. Neyestanaki, N. Kumar and L. E. Lindfors, Applied Catalysis B: Environmental, 1995, 7, (1-2), 95-111 ; G. Gun, O. Tsionsky and O. Lev, Mat. Res. Soc., 1994, 346, 1016). Il peut être noté que ces derniers sont utilisés par exemple dans la synthèse de pyrazidine, un composé entrant dans l'élaboration d'une grande variété de médicaments et de produits agrochimiques.

Selon un mode de réalisation ne faisant pas partie de l'invention, le procédé comprend une étape subséquente de traitement basique dudit matériau composite, notamment par de la soude de concentration 1M à 6M.

De préférence, le sel de cuivre utilisé pour l'étape de mise en présence avec la terre de diatomée brute est choisi dans le groupe constitué du chlorure, nitrate, sulfate, phosphate et oxyde de cuivre.

La présente invention concerne également l'utilisation d'un matériau composite tel que défini ci-dessus, pour la décontamination des sols et eaux contaminés par des cations de métaux lourds ou des cations d'éléments des groupes 3 à 12 du tableau périodique, pour la rétention de contaminants anioniques ou cationiques ou d'oxyanions, notamment de type arsenic, ou en tant que fertilisant, agent anti-bactérien, fongicide, catalyseur ou échangeur ionique.

Les matériaux de la présente invention, à savoir des composites de type terre de diatomée - complexe cuivre (devilline, posnjakite), peuvent être utilisés en tant que réactifs de synthèse, d'intermédiaires réactionnels, ou de matériaux finals dans les domaines de la protection environnementale, de la chimie générale et de spécialité (agent catalytique de réaction, échangeur ionique, charge dans une matrice de polymère, etc...) ou notamment dans les domaines textiles, automobiles ou aéronautiques.

### Description détaillée des protocoles de synthèse

Un descriptif du protocole de synthèse des composites les plus représentatifs est présenté ci-après.

### 1) Terre de diatomée - complexe cuivre

Le protocole de synthèse de la présente invention relatif au composite terre de diatomée - deviline est décrit ci-dessous. La composition chimique exprimée en masse de la terre de diatomée initiale en vue de synthétiser le composite mixte est la suivante :
a% SiO₂, b% Al₂O₃, c% CaCO₃
où a est compris de 60 à 95 ; b est compris de 5 à 25 et c est compris de 0 à 40.

### a) lorsque c # 0 :

Cette terre de diatomée est mise en suspension dans une solution aqueuse d'un sel de cuivre (II), tel que le nitrate de cuivre, le chlorure de cuivre, le sulfate de cuivre, de concentration comprise de 5.10⁻⁴ mol.L⁻¹ à 1 mol.L⁻¹. De manière préférée, la solution de cuivre présente une concentration comprise de 5.10⁻⁴ mol.L⁻¹ à 5.10⁻¹ mol.L⁻¹ en dissolvant la masse de sel de cuivre anhydre correspondante dans 500 mL d'eau distillée.

La terre de diatomée (masse comprise de 0,5 g à 10,0 g) est prélevée et mise en contact avec un volume de solution de sel de cuivre environ égal à 100 mL durant un temps de contact compris de 5 minutes à 48 heures à une température comprise de 5°C à 200°C. De manière préférée le temps de contact est limité à un intervalle de 1 heure à 24 heures alors que la température est fixée dans la gamme comprise de 5°C à 100°C. De manière encore plus préférée, les conditions opératoires considérées sont arrêtées à un temps de synthèse s'échelonnant de 1 heure à 12 heures et une température comprise entre 5°C et 40°C.

Au cours de la réaction, le pH est contrôlé par ajout d'acide chlorhydrique ou sulfurique de concentration 0,05 mol.L⁻¹ afin de rester dans un domaine pHmétrique compris entre 2 et 10, mais de manière préférentielle, le domaine de pH peut être restreint à une gamme allant de 4 à 9 unités pHmétriques.

A l'issue du temps de contact, le composite ainsi préparé est alors récupéré selon deux méthodes. La première consiste à centrifuger le mélange réactionnel à une vitesse de 20.000 tours/minute. Le surnageant est alors éliminé alors que le produit est lavé à l'eau distillée. L'entière opération est réitérée 3 fois. La deuxième méthode considérée est la filtration dite sur Büchner, où le composite est séparé des eaux mères par filtration sur papier filtre.

De même, deux différentes méthodes de séchage sont mises en application. D'une part, on peut mettre en oeuvre le séchage en étuve où dans un tel cas, le matériau final est placé à une température comprise de 30°C à 100°C durant 12 heures à 24 heures. Préférentiellement, la température est fixée à une température dans la gamme comprise de 40°C à 100°C. D'autre part, le composite peut être séché par lyophilisation, dont le principe consiste à éliminer l'eau à très basse température tout en maintenant un vide poussé. Le composite est mis à lyophiliser durant un temps de 24 heures.

### b) lorsque c = 0 (ce mode de réalisation ne fait pas partie de l'invention):

Une masse de terre de diatomée comprise entre 2,7 g et 5 g, est placée dans un ballon de 250 mL contenant 100 mL d'une solution de soude molaire à 90°C pendant 2 heures. Dans un bécher de 250 mL, la solution de cuivre est préparée en introduisant une quantité de sulfate de cuivre (solution aqueuse de cuivre) dans une gamme de masse allant de 1 à 5 g dans 100 mL d'eau distillée, le tout sous forte agitation. Par la suite, la terre de diatomée activée est récupérée par filtration sur Büchner et introduite dans la solution de sulfate de cuivre (à une concentration d'environ 8,7.10⁻² à environ 0,15 mol. L⁻¹) sous agitation pendant 24 heures. Le matériau final est alors filtré sur Büchner, lavé à l'eau distillée et séché dans une étuve à 40°C pendant 24 heures.

### 2) Terre de diatomée - oxyde de cuivre (ce mode de réalisation ne fait pas partie de l'invention)

Le protocole de synthèse relatif au composite de type terre de diatomée - oxyde de cuivre est présenté ici. Le matériau initial utilisé est un matériau composite de type terre de diatomée - devilline dont le protocole de synthèse a été complètement décrit ci-avant. La composition chimique exprimée sous forme d'oxyde, et en masse du matériau utilisé en vue de synthétiser le composite mixte est la suivante :
a% SiO₂, b% CuO, c% SO₃
où est compris de 30 à 70 ; b est compris de 20 à 50 et c est compris de 5 à 25.

Ce matériau est placé en four à calciner et soumis à un programme de montée en température dans une gamme de vitesse de montée de 0,5°C/min à 10,0°C/min pour une température finale comprise de 200°C à 1 000°C pendant un temps à la température pallier allant de 1 heure à 8 heures. De manière préférée, le traitement thermique est opéré à une température comprise de 700°C à 900°C, à raison d'une vitesse de montée, comprise de 5°C/m in à 10°C/min pendant une durée de 30 minutes à 3 heures. Le cas échéant, le matériau peut être remis en solution pour élimination de produit secondaire, tel que le sulfate de calcium sous sa forme déshydratée (l'anhydrite), sous agitation dans un volume d'eau distillée de 50 mL à 500 mL, mais de manière préférée dans une gamme de 100 mL à 300 mL, à température ambiante, pendant une durée variable de 1 heure à 5 heures, mais de manière préférée, pendant une durée comprise de 1 heure à 3 heures. Par la suite, la solution est laissée décanter à température ambiante permettant d'éliminer les composés les plus solubles, dont fait partie l'anhydrite. Le matériau est ensuite dispersé en solution dans l'eau distillée, en considérant un volume de 50 mL à 500 mL, mais de manière préférée dans une gamme de 100 mL à 300 mL, avant de le filtrer sur Büchner et de la placer en étuve à une température allant de 60°C à 100°C.

### FIGURES

Figure 1 : Diffractogramme de rayons X du composite de l'exemple 1 (terre de diatomée / devilline).
Figure 2 : Clichés par microscope électronique à balayage (MEB) du composite de l'exemple 1 (terre de diatomée/devilline).
Figure 3 : Diffractogramme de rayons X du composite de l'exemple 3 (terre de diatomée / oxyde de cuivre).
Figure 4 : Clichés par microscope électronique à balayage (MEB) du composite de l'exemple 3 (terre de diatomée / oxyde de cuivre).
Figure 5 : Diffractogramme de rayons X du composite de l'exemple 4 (terre de diatomée / spertiniite).
Figure 6 : Clichés par microscope électronique à balayage (MEB) du composite de l'exemple 4 (terre de diatomée / spertiniite).
Figure 7 : Diffractogramme de rayons X du composite de l'exemple 5 (terre de diatomée / brochantite).
Figure 8 : Clichés par microscope électronique à balayage (MEB) du composite de l'exemple 5 (terre de diatomée / brochantite).
Figure 9 : Diffractogramme de rayons X du composite de l'exemple 6 (terre de diatomée / hydroxyde de cuivre (II)).

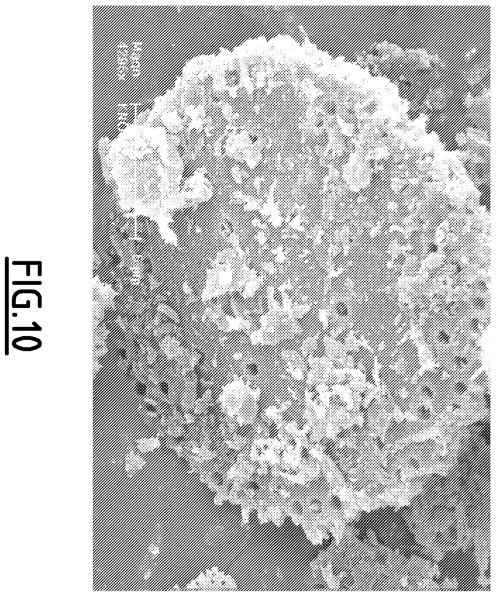

Figure 10 : Clichés par microscope électronique à balayage (MEB) du composite de l'exemple 6 (terre de diatomée / hydroxyde de cuivre (II)).

Sans que l'on veuille la limiter d'une quelconque façon, la présente invention va être d'avantage illustrée par les exemples suivants.

### EXEMPLES

### Exemple 1

### Préparation du composite à partir de terre de diatomée et d'une solution de sulfate de cuivre (II)

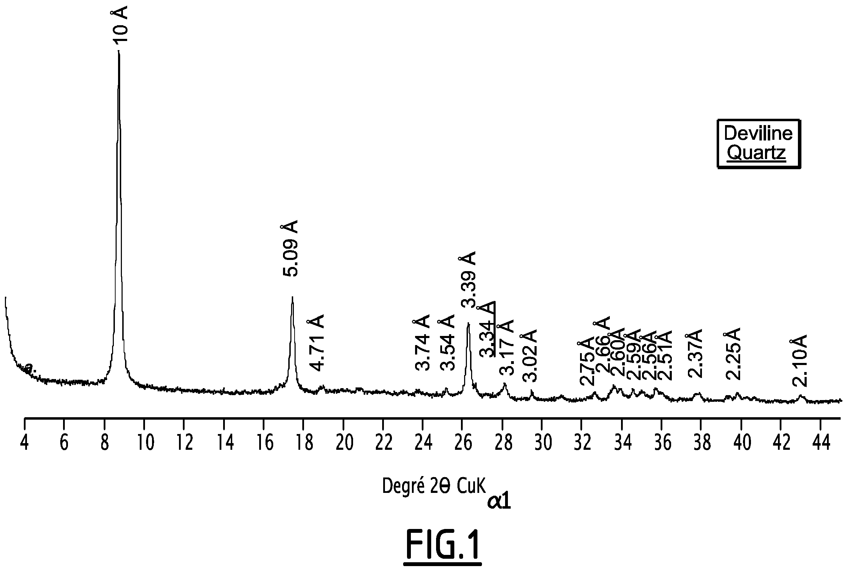

1 g de terre de diatomée (composition massique : 70% SiO₂, 5% Al₂O₃ et 25% CaCO₃; surface spécifique (S_{BET}) environ égale à 10 m².g⁻¹) est mis en suspension dans 100 mL d'une solution aqueuse 0,05 molaire de sulfate de cuivre (II). Après 1 heure de contact à température ambiante, le matériau de couleur bleu clair est récupéré par filtration sur Büchner et mis à sécher en étuve pendant une durée de 24 heures à 30 °C. La diffraction de rayon s X réalisée sur le matériau fait apparaître une phase cristalline identifiée comme la devilline **(****Figure 1****).** Le spectre ultraviolet obtenu sur les eaux mères permet d'estimer la masse de cuivre présent à la surface de la terre de diatomée, dans ce cas environ 0,15 g. En d'autres termes, près de 47 % en masse de cuivre, présent dans la solution initiale, participe à la formation de la phase cristalline.

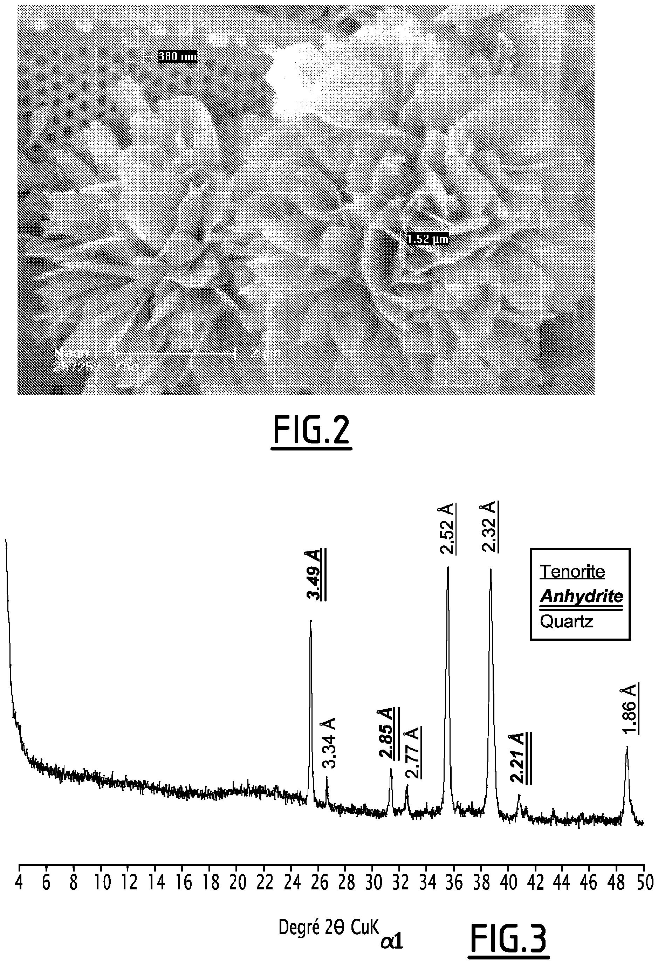

Les clichés de microscopie à balayage **(****Figure 2****)** montrent une morphologie de type rose des sables.

Enfin, le composite ainsi obtenu présente une surface spécifique (S_{BET}) de l'ordre d'environ 20 m².g⁻¹.

### Exemple 2

### Préparation du composite à partir de terre de diatomée et d'une solution de nitrate de cuivre (II)

4,5 g de terre de diatomée (composition massique : 90% SiO₂, 5% Al₂O₃ et 5% CaCO₃) sont mis en suspension dans 100 mL d'une solution aqueuse 0,05 molaire de nitrate de cuivre (II). Après une agitation vigoureuse de 12 heures, le matériau composite est récupéré par centrifugation et séché en étuve à une température de 70°C pendant 12 heures. L'analyse par diffraction de rayons X met en évidence un mélange de deux phases cristallines que sont la devilline et la ponsjakite.

### Exemple 3

### Préparation du composite terre de diatomée / oxyde de cuivre (II) à partir du composite terre de diatomée - devilline (ne faisant pas partie de l'invention)

1 g de terre de diatomée - devilline (composition massique des principaux composants, exprimée sous forme d'oxyde : 40% SiO₂, 30% CuO, 14% SO₃) est placé dans un creuset puis en étuve pour calcination. Le programme considéré consiste à une montée à 700°C pendant deux heures (i.e. une vitesse de montée de 5,83°C/minute), où le matériau reste à la température pallier pendant une durée de 1 heure. Le matériau est ensuite laissé refroidir à température ambiante, puis placé dans 100 mL d'eau distillée sous agitation vigoureuse pendant 2 heures. Après décantation de la solution, le surnageant est éliminé, le solide est remis en solution dans 100 mL d'eau distillée avant d'être filtré sur Büchner. Le matériau est finalement mis à sécher en étuve à une température de 80°C.

La diffraction de rayons X réalisée sur le matériau ainsi obtenu permet d'observer l'apparition d'une nouvelle phase cristalline identifiée comme la tenorite (**Figure 3**), un oxyde de cuivre (II) de formule chimique CuO.

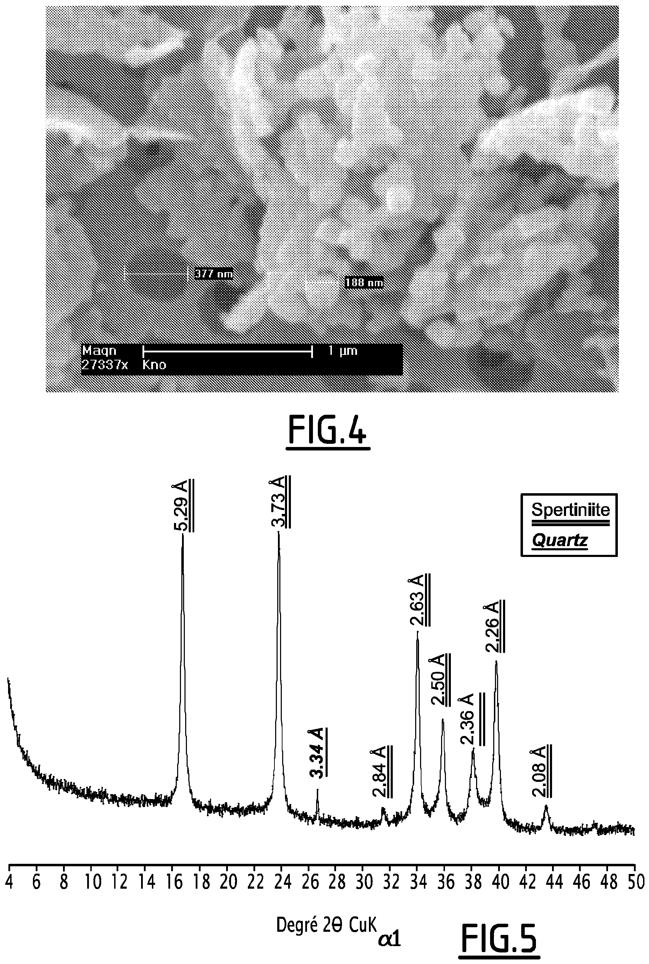

Les clichés de microscopie à balayage (**Figure 4**) montrent la présence de particules de CuO de dimension nanométrique.

Enfin, le composite ainsi obtenu présente une surface spécifique (S_{BET}) de l'ordre d'environ 5 m².g⁻¹.

### Exemple 4 (ne faisant pas partie de l'invention)

### Préparation d'un composite à partir de terre de diatomée exempte de CaCO₃ et d'une solution de sulfate de cuivre (II)

2,7 g de terre de diatomée exempte de CaCO₃ (composition massique : 94% SiO₂, 6% autres éléments) sont placés dans un ballon de 250 mL contenant 100 mL d'une solution aqueuse de soude 6 M à 90°C pendant 2 heures. Dans un bécher de 250 mL, la solution aqueuse de cuivre (II) est préparée en introduisant 4,80 g de sulfate de cuivre (II) dans 200 mL d'eau distillée. Enfin, la terre de diatomée, récupérée par filtration sur Büchner, est introduite dans la solution de cuivre (à une concentration de 0,15 mol.L⁻¹) sous agitation pendant 24 heures.

La diffraction de rayons X réalisée sur le matériau ainsi obtenu permet d'observer l'apparition d'une nouvelle phase cristalline majoritaire identifiée comme la spertiniite (**Figure 5****),** un oxyde de cuivre de formule chimique Cu(OH)₂.

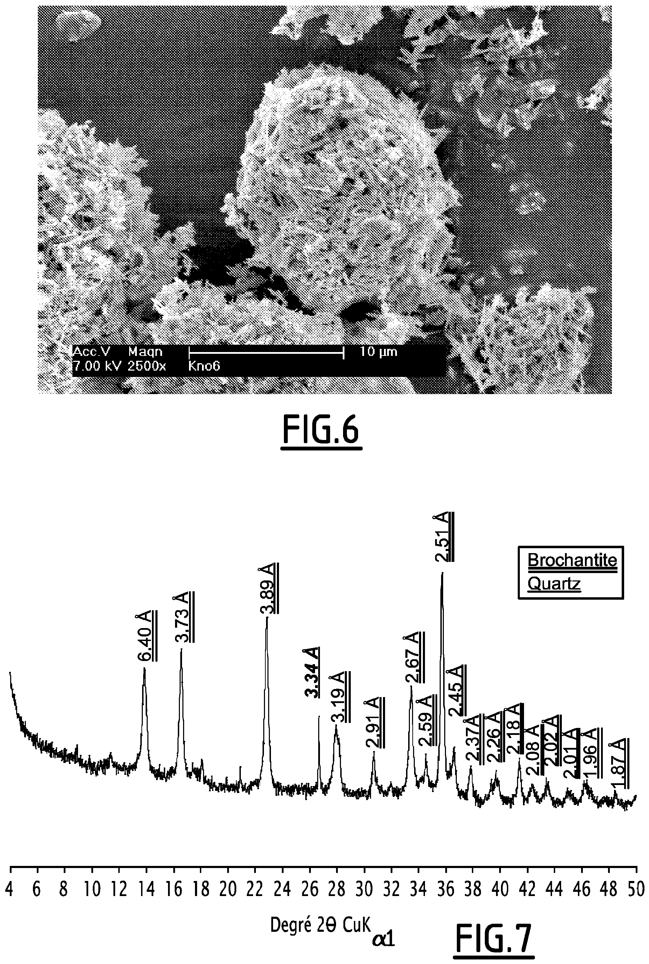

Les clichés de microscopie à balayage **(****Figure 6**) montrent la présence d'une nouvelle phase cristalline. Visuellement, la morphologie des squelettes de diatomée est préservée. En outre, la morphologie de la phase cristalline nouvellement créée, la spertiniite, se présentant comme une succession de feuillets désordonnés, est visible à la surface de la plupart des squelettes de diatomée.

Enfin, le composite ainsi obtenu présente une surface spécifique (S_{BET}) de l'ordre d'environ 50 m².g⁻¹.

### Exemple 5 (ne faisant pas partie de l'invention)

### Préparation d'un autre composite à partir de terre de diatomée exempte de CaCO₃ et d'une solution de sulfate de cuivre (II)

5 g de terre de diatomée exempte de CaCO₃ (composition massique : 94% SiO₂, 6% autres éléments) sont placés dans un ballon de 250 mL contenant 100 mL d'une solution aqueuse de soude 0,1 M à 90°C pendant 2 heures. Dans un bécher de 250 mL, la solution aqueuse de cuivre (II) est préparée en introduisant 1,40 g de sulfate de cuivre (II) dans 100 mL d'eau distillée. Enfin, la terre de diatomée, récupérée par filtration sur Büchner, est introduite dans la solution de cuivre (à une concentration de 8,77.10⁻² mol.L⁻¹) sous agitation pendant 24 heures.

La diffraction de rayons X réalisée sur le matériau ainsi obtenu permet d'observer l'apparition d'une nouvelle phase cristalline majoritaire identifiée comme la brochantite (**Figure 7**), de formule chimique Cu₆SO₄(OH)₆.

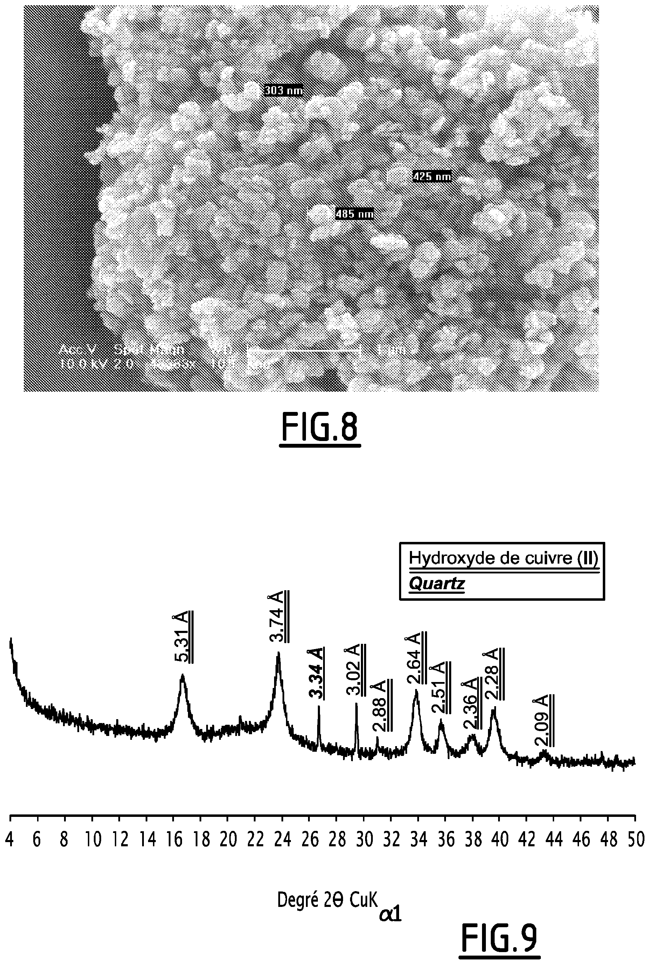

Les clichés réalisés par MEB sur le matériau ainsi obtenu sont présentés sur la **Figure 8**. A la surface des squelettes de diatomée est présent un fin film identifié par diffraction de rayons X comme la brochantite.

A plus forts grossissements, il apparaît que le film est en fait constitué d'un agrégat de cristaux de taille nanométrique identifiés comme précédemment comme la brochantite. Sur les clichés, la taille moyenne des particules est évaluée à environ 250 nm. Ces cristaux se répartissent uniformément à la surface des morphologies des terres de diatomée donnant lieu à un film dont l'épaisseur peut attendre 500 nm par endroit.

Enfin, le composite ainsi obtenu présente une surface spécifique (S_{BET}) de l'ordre d'environ 50 m².g⁻¹.

### Exemple 6 (ne faisant pas partie de l'invention)

### Préparation d'un composite terre de diatomée / hydroxyde de cuivre (II) à partir du composite terre de diatomée - devilline

1 g de composite terre de diatomée - devilline est mis sous agitation dans 100 mL de solution de soude de concentration 1 mole.L⁻¹ pendant une durée de 2 heures. Le solide en suspension est ensuite laissé décanter, le surnageant est éliminé, et le matériau redispersé dans 100 mL d'eau distillée sous agitation durant 15 minutes. Le solide est ensuite filtré sur Büchner, lavé avec de l'eau distillée et placé en étuve à 60°C pendant 24 heures. L'échantillon est ensuite caractérisé par diffraction de rayons X (**Figure 9**).

Le matériau composite ainsi formé présente une surface spécifique (S_{BET}) de l'ordre d'environ 50 m².g⁻¹.

### Evaluation des propriétés de rétention des composites terre de diatomée/devilline et terre de diatomée/posnjakite

### A - Rétention des tensioactifs

### 1. Protocole expérimental

Les matériaux utilisés dans le cadre des tests de rétention, sont au nombre de trois : à savoir les deux matériaux composites, terre de diatomée/ devilline et terre de diatomée/posnjakite, préparés suivant le protocole de synthèse décrit ci-dessus, et la terre de diatomée (TD) de départ.

Le composite terre de diatomée/posnjakite (désigné TDP) est élaboré en mélangeant 1 g de terre de diatomée dans une solution de CuSO₄ 2,5.10⁻² molaire pendant 6 heures ; et le composite terre de diatomée/devilline (désigné TDD) est obtenu par mélange de la même masse en terre de diatomée mais dans une solution de CuSO₄ 10⁻¹ molaire pendant une durée d'agitation de 3 heures.

1 g de matériau (TD, TDD ou TDP) est prélevé et mis en suspension dans 100 mL d'eau distillée sous agitation jusqu'à complète homogénéisation (mélange A).

Le tensioactif cationique utilisé ici est le chlorure d'hexadécyltriméthyl ammonium, de formule chimique (CH₃(CH₂)₁₅N(Cl)(CH₃)₃, (Fluka, CAS N°112-02-7, -25% dans l'eau, désigné par C16TMA ou TA). Ce tensioactif est composé d'une tête chargée positivement, hydrophile (par le cation ammonium) et d'une longue chaîne carbonée hydrophobe, formée dans ce cas, de 16 atomes de carbone

Le tensioactif est mis en solution dans 100 mL d'eau distillée, sous agitation pendant 5 minutes, dans des proportions précisées dans le tableau (mélange B).

Le mélange A est ajouté au mélange B sous forte agitation pendant une durée de contact de 24 heures. Le matériau est ensuite récupéré par filtration sur Büchner, lavé à grandes eaux et placé en étuve à 50°C. Le matériau est finalement caractérisé qualitativement par diffraction de rayons X, spectroscopie infrarouge, microscopie électronique à balayage et quantitativement par fluorescence X.

### 2. Test de rétention du tensioactif cationique par les matériaux composites

### 2.1. Propriétés de rétention du composite terre de diatomée/deviline (TDD)

Suite à la mise en contact de TA (rapport molaire composite/TA = 1/6) avec le matériau composite TDD (terre de diatomée/devilline), le matériau récupéré est analysé par les méthodes de caractérisation usuelles, et notamment par une analyse thermogravimétrique différentielle.

Le comportement de la terre de diatomée/devilline TDD (sans tensioactif) soumis à un programme de montée en température (5°C / minute) est étudié par thermogravimétrie différentielle.

La perte en masse totale enregistrée pour l'échantillon servant de base à l'échange avec le tensioactif est de 20%, correspondant à la destruction de la phase cristalline deviline et la déshydroxylation.

L'analyse thermogravimétrique dans les mêmes conditions que précédemment est réalisée sur le matériau composite terre de diatomée/deviline en contact avec TA en solution (TDD-TA). La présence d'un exotherme supplémentaire indique la présence du tensioactif.

### 2.2. Propriétés de rétention du composite terre de diatomée/posnjakite (TDP)

Suite à la mise en contact de TA (rapport molaire composite/TA = 1/2) avec le matériau composite (terre de diatomée/posnjakite), le matériau récupéré est analysé par les méthodes de caractérisation usuelles, et notamment par une analyse thermogravimétrique différentielle.

Tout comme dans le cas du composite terre de diatomée/deviline, la présence d'un exotherme supplémentaire centré sur 280°C atteste de la présence du tensioactif.

Afin d'apporter des éléments de comparaison à la rétention de TA par les matériaux composites, la même expérience est opérée sur la terre de diatomée.

### 2.3. Propriétés de rétention de la terre de diatomée (TD)

Suite à la mise en contact de TA (rapport molaire composite/TA = 1/6) avec le matériau composite, le matériau récupéré est analysé par les méthodes de caractérisation usuelles, et notamment par une analyse thermogravimétrique différentielle.

On observe la présence d'un exotherme de moyenne intensité (perte de 3%) aux alentours de 300°C comme dans les cas précédents. Cet exotherme est principalement attribué à l'oxydation des carbonates présents dans la composition chimique de la terre de diatomée TD, à hauteur de 2,5% dans le domaine de température considéré. La différence de perte en masse peut être attribuée à la présence de tensioactif résiduel dans la porosité de la terre de diatomée.

En conclusion, l'analyse thermogravimétrique a permis de mettre en évidence la présence du tensioactif dans les composites de terre de diatomée/posnjakite et devilline. Par comparaison, il a été mis en évidence que c'est bien la deviline ou la posnjakite qui participe à la rétention du tensioactif dans la mesure où les résultats enregistrés sur la terre de diatomée servant de base à la fonctionnalisation (TD) ne fait apparaître aucune perte en masse supplémentaire outre celle relative au départ des carbonates.

### B - Rétention de cations de métaux lourds

Une masse de 0,5 g de composite terre de diatomée - devilline est placée dans un volume de 95 cm³ d'eau distillée. Le mélange est laissé agiter pendant une durée de 1 heure à température ambiante afin d'assurer une parfaite homogénéisation du solide en solution. Le pH du système est ensuite mesuré pour rendre compte que celui-ci est compris dans une gamme comprise entre 5,00 et 6,00 unités pHmétriques. A l'issue de cette étape, 5 mL de solutions de nitrate de plomb (PbNO₃, *Fluka,* 99%) sont introduits dans le système pour des concentrations en plomb de 10.10⁻², 9.10⁻², 8.10⁻², 7.10⁻², 6.10⁻², 5.10⁻², 4.10⁻², 3.10⁻², 2.10⁻², 1.10⁻² mole/L (ou respectivement 10, 9, 8, 7, 6, 5, 4, 3, 2, 1 ppm). Les échantillons sont laissés à l'équilibre pendant 24 heures, filtrés sur Büchner, et placés en étuve à 60°C pendant 24 heures. La car actérisation des échantillons est effectuée par diffraction de rayons X et fluorescence X. La capacité maximale de rétention en plomb est de 0,45 mmol/g de composite terre de diatomée / devilline (ou 93 mg de plomb pour 1 g de composite).

### C - Rétention d'autres cations

### 1. Rétention de cations nickel (II) en solution

Une masse de 0,5 g de composite terre de diatomée devilline est introduite dans 100 mL d'une solution aqueuse de nickel (II) de concentration égale à 12 mmol/L préparée à partir de nitrate de nickel hexahydraté (II) ((Ni(NO₃)·6 H₂O, > 98,5%, Fluka).

Après 24 heures d'agitation, le produit est filtré sur Büchner, et placé en étuve à 60°C pendant 24 heures. La capacité de rétention en nickel (II) est égale à 20 mg/g de composite terre de diatomée / devilline (soit 20 mg de nickel pour 1 g de composite).

### 2. Rétention des cations cobalt (II) en solution

Une masse de 0,5 g de composite terre de diatomée / devilline est introduite dans 100 mL de solution aqueuse de cobalt (II) de concentration égale à 10 mmol/L préparé à partir de nitrate de nickel hexahydraté (II) (Co(NO₃)·6 H₂O, ≥ 98,0%, Riedel-de-Haën).

Après 24 heures d'agitation, le produit est filtré sur Büchner, et placé en étuve à 60°C pendant 24 heures. La capacité de rétention en cobalt (II) est de 35 mg/g de composite terre de diatomée / devilline (soit 35 mg de nickel pour 1 g de composite).

## Revendications

1. Matériau composite comprenant de la terre de diatomée et une phase à base de cuivre, **caractérisé en ce que** la terre de diatomée est non calcinée et contient du carbonate de calcium et **en ce que** la phase à base de cuivre est constituée de devilline, de posnjakite ou de leurs mélanges.

2. Matériau composite selon la revendication 1, dans lequel la phase à base de cuivre présente une morphologie de type rose des sables, sphérique ou sous forme d'aiguilles.

3. Matériau composite selon l'une quelconque des revendications 1 à 2, **caractérisé en ce que** la terre de diatomée est choisie dans le groupe constitué des matériaux siliciques macroporeux d'algues eucaryotes fossilisées.

4. Matériau composite selon l'une quelconque des revendications 1 à 3, **caractérisé en ce que** ledit matériau a une capacité d'échange de cations comprise entre 7 et 300 meq/100g.

5. Procédé de préparation d'un matériau composite selon l'une quelconque des revendications 1 à 4, ledit procédé étant **caractérisé en ce qu'**il comprend les étapes suivantes :
- une étape de mise en présence de la terre de diatomée non calcinée contenant du carbonate de calcium avec une solution aqueuse de sel de cuivre,
- une étape de récupération dudit matériau composite, notamment par filtration ou centrifugation, et
- une étape de séchage ou de lyophilisation.

6. Utilisation d'un matériau composite selon l'une quelconque des revendications 1 à 4, pour la décontamination des sols et eaux contaminés par des cations de métaux lourds ou des cations d'éléments des groupes 3 à 12 du tableau périodique, pour la rétention de contaminants anioniques ou cationiques ou d'oxyanions, ou en tant que fertilisant, agent anti-bactérien, fongicide, catalyseur ou échangeur ionique.

## Patentansprüche

1. Verbundmaterial, das Diatomeenerde und eine Phase auf Kupferbasis enthält, **dadurch gekennzeichnet, dass** die Diatomeenerde nicht kalziniert ist und Calciumcarbonat enthält und dass die Phase auf Kupferbasis aus Devillin, Posnjakit oder ihren Gemischen gebildet ist.

2. Verbundmaterial nach Anspruch 1, wobei die Phase auf Kupferbasis eine Morphologie des Sandrosentyps oder des sphärischen Typs oder in Form von Nadeln aufweist.

3. Verbundmaterial nach einem der Ansprüche 1 bis 2, **dadurch gekennzeichnet, dass** die Diatomeenerde aus der Gruppe gewählt ist, die aus makroporösen Kieselmaterialien fossiler eukaryotischer Algen gebildet ist.

4. Verbundmaterial nach einem der Ansprüche 1 bis 3, **dadurch gekennzeichnet, dass** das Material eine Kationenaustauschkapazität im Bereich von 7 bis 300 meq/100 g besitzt.

5. Verfahren zum Bereitstellen eines Verbundmaterials nach einem der Ansprüche 1 bis 4, wobei das Verfahren **dadurch gekennzeichnet ist, dass** es die folgenden Schritte umfasst:
- einen Schritt des Bereitstellens der nicht kalzinierten Diatomeenerde, die Calciumcarbonat enthält, in einer wässrigen Kupfersalzlösung,
- einen Schritt des Wiedergewinnens des Verbundmaterials insbesondere durch Filtrieren oder Zentrifugieren, und
- einen Schritt des Trocknens oder der Lyophilisation.

6. Verwendung eines Verbundmaterials nach einem der Ansprüche 1 bis 4 für die Dekontaminierung von kontaminierten Böden und Gewässern durch Schwermetall-Kationen oder Kationen der Elemente der Gruppen 3 bis 12 des periodischen Systems für die Retention von anionischen oder kationischen oder oxyanionischen Kontaminierungsstoffen oder als Düngemittel, antibakterieller Wirkstoff, Fungizid, Katalysator oder Ionentauscher.

## Claims

1. Composite material comprising diatomaceous earth and a copper-based phase, **characterised in that** the diatomaceous earth is uncalcined and contains calcium carbonate, and **in that** the copper-based phase is composed of devilline, posnjakite or mixtures thereof.

2. Composite material according to claim 1, wherein the copper-based phase has a morphology which is of the desert rose type, spherical or in the form of needles.

3. Composite material according to either claim 1 or claim 2, **characterised in that** the diatomaceous earth is chosen from the group composed of the macroporous silica materials of fossilised eukaryotic algae.

4. Composite material according to any one of claims 1 to 3, **characterised in that** said material has a cation exchange capacity between 7 and 300 meq/100g.

5. Process for the preparation of a composite material according to any one of claims 1 to 4, said process being **characterised in that** it comprises the following steps:
- a step of bringing the uncalcined diatomaceous earth containing calcium carbonate into contact with an aqueous copper salt solution,
- a step of recovering said composite material, especially by filtration or centrifugation, and
- a step of drying or lyophilisation.

6. Use of a composite material according to any one of claims 1 to 4 for the decontamination of soils and waters contaminated with heavy metal cations or cations of elements of groups 3 to 12 of the periodic table, for retaining anionic or cationic contaminants or oxyanions, or as a fertiliser, antibacterial agent, fungicide, catalyst or ion exchanger.
